# EUROPEAN PATENT APPLICATION

(11) **EP 4 803 578 A1**
(43) Date of publication of application: **09.09.2026**
(21) Application number: 24886126.2
(22) Date of filing: 23.10.2024
(51) Int. Cl.: C08L 71/10, C08L 81/02, C08K 7/14, B32B 15/08

(54) **THERMOPLASTIC RESIN COMPOSITION AND MOLDED ARTICLE PRODUCED THEREFROM**

(30) Priority: 31.10.2023 KR 20230147880
(71) Applicant: LOTTE CHEMICAL CORPORATION, Seoul 05551 (KR)
(72) Inventor: SEO, Yeong Deuk, Uiwiang-si Gyeonggi-do 16073 (KR); LEE, Min Soo, Uiwiang-si Gyeonggi-do 16073 (KR); LEE, Sang Hwa, Uiwiang-si Gyeonggi-do 16073 (KR)
(74) Representative: Germain Maureau
(86) International application number: PCT/KR2024/016189
(87) International publication number: WO 2025/095451

(57) **Abstract**

A thermoplastic resin composition of the present invention comprises about 100 parts by weight of a polyaryletherketone resin comprising a first polyetheretherketone resin having a melting temperature of about 330 to about 350°C and a second polyetheretherketone resin having a melting temperature of about 300 to about 325°C; about 10 to about 45 parts by weight of a polyarylethersulfone resin; and about 10 to about 60 parts by weight of a glass fiber. The thermoplastic resin composition has excellent metal bondability, impact resistance, flowability, balance of these physical properties, and the like.

## Description

### [Technical Field]

The present invention relates to a thermoplastic resin composition and a molded article produced therefrom. More particularly, the present invention relates to a thermoplastic resin composition having good properties in terms of metal bondability, impact resistance, flowability, property balance therebetween, and the like, and a molded article produced therefrom.

### [Background Art]

Polyaryletherketone (PAEK) resins, such as polyetheretherketone (PEEK) resins, have been used in office automation equipment, automotive applications, and the like due to their good heat resistance, chemical resistance, rigidity, fatigue resistance, and the like.

However, the polyaryletherketone resins exhibit poor metal bonding strength due to their low flowability, which limits their use as metal bonding materials, and their low impact resistance further restricts their application in products requiring high impact resistance.

Blending with a polyarylethersulfone (PAES) resin has been employed to enhance impact strength of polyaryletherketone (PAEK) resins. However, due to limited compatibility between PAEK and PAES resins, blends of PAEK and PAES resins can suffer from deterioration in mechanical properties and the like.

Therefore, there is a need for a thermoplastic resin composition that has good properties in terms of metal bondability, impact resistance, flowability, property balance therebetween, and the like.

The background technique of the present invention is disclosed in Korean Patent Registration No. 10-2163638 and the like.

### [Disclosure]

### [Technical Problem]

It is one object of the present invention to provide a thermoplastic resin composition having good properties in terms of metal bondability, impact resistance, flowability, property balance therebetween, and the like.

It is another object of the present invention to provide a molded article produced from the thermoplastic resin composition.

The above and other objects of the present invention will become apparent from the detailed description of the following embodiments.

### [Technical Solution]

1. One aspect of the present invention relates to a thermoplastic resin composition. The thermoplastic resin composition comprises: about 100 parts by weight of a polyaryletherketone resin comprising a first polyetheretherketone resin having a melting temperature of about 330°C to about 350°C and a second polyetheretherketone resin having a melting temperature of about 300°C to about 325°C; about 10 to about 45 parts by weight of a polyarylethersulfone resin; and about 10 to about 60 parts by weight of glass fiber.
2. In embodiment 1, the polyaryletherketone resin may comprise about 30 wt% to about 70 wt% of the first polyetheretherketone resin and about 30 wt% to about 70 wt% of the second polyetheretherketone resin.
3. In embodiments 1 or 2, the first polyetheretherketone resin and the second polyetheretherketone resin may comprise a repeat unit represented by Formula 1. 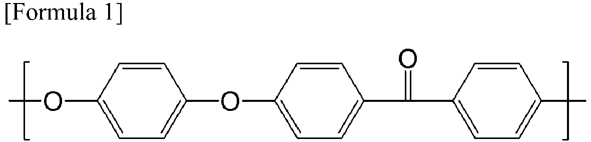
4. In embodiments 1 to 3, the first polyetheretherketone resin may have a ratio of ketone groups to ether groups of about 1:1 to about 1:3.
5. In embodiments 1 to 4, the first polyetheretherketone resin may have a melt viscosity of about 50 Pa·s to about 200 Pa·s, as measured at a temperature of 400°C and a shear rate of 1,000 sec⁻¹ using a capillary viscometer in accordance with ISO 11443.
6. In embodiments 1 to 5, the second polyetheretherketone resin may have a ratio of ketone groups to ether groups of about 1:1 to about 1:1.9.
7. In embodiments 1 to 6, the second polyetheretherketone resin may have a melt viscosity of about 200 Pa·s to about 500 Pa·s, as measured at a temperature of 340°C and a shear rate of 1,000 sec⁻¹ using a capillary viscometer in accordance with ISO 11443.
8. In embodiments 1 to 7, the polyarylethersulfone resin may comprise a repeat unit represented by Formula 2. 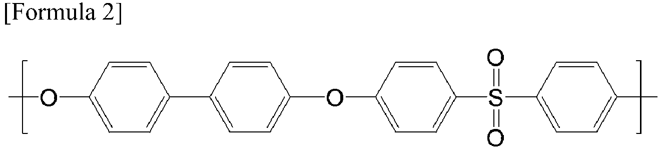
9. In embodiments 1 to 8, the polyarylethersulfone resin may have a melt viscosity of about 200 Pa·s to about 400 Pa·s, as measured at a temperature of 400°C and a shear rate of 1,000 sec⁻¹ using a capillary viscometer in accordance with ASTM D3835.
10. In embodiments 1 to 9, the thermoplastic resin composition may have a metal bonding strength of about 35 MPa to about 60 MPa with respect to an aluminum-based metal specimen, as measured in accordance with ISO 19095.
11. In embodiments 1 to 10, the thermoplastic resin composition may have a notched Izod impact strength of about 5 kgf·cm/cm to about 15 kgf·cm/cm, as measured on a 1/8" thick specimen in accordance with ASTM D256.
12. In embodiments 1 to 11, the thermoplastic resin composition may have a spiral flow length of about 75 mm to about 120 mm, as measured on a specimen after injection molding of the specimen in a spiral-shaped mold having a size of 15 mm width and 0.5 mm thickness under conditions of a molding temperature of 380°C, a mold temperature of 150°C, an injection pressure of 100 MPa, and an injection rate of 100 mm/s.
13. Another aspect of the present invention relates to a molded article. The molded article is produced from the thermoplastic resin composition according to embodiments 1 to 12.
14. A further aspect of the invention relates to a composite material. The composite material comprises: a plastic member produced from the thermoplastic resin composition according to embodiments 1 to 12; and a metal member adjoining the plastic member.
15. In embodiment 14, the metal member may comprise at least one selected from among aluminum, titanium, iron, and zinc.

### [Advantageous Effects]

Embodiments of the present invention provide a thermoplastic resin composition having good properties in terms of metal bondability, impact resistance, flowability, property balance therebetween, and the like, and a molded article produced therefrom.

### [Best Mode]

Hereinafter, embodiments of the present invention will be described in detail.

The thermoplastic resin composition according to the present invention comprises: (A) a polyaryletherketone resin comprising two polyaryletherketone resins having different melting temperatures (Tm); (B) a polyarylethersulfone resin; and (C) glass fiber.

### (A) Polyaryletherketone resin

The polyaryletherketone resin according to one embodiment of the invention may be used together with the polyarylethersulfone resin and the glass fiber to improve properties of the thermoplastic resin composition, such as metal bondability, impact resistance, flowability, property balance, and the like, and comprises (A1) a first polyetheretherketone resin having a melting temperature of about 330°C to about 350°C and (A2) a second polyetheretherketone resin having a melting temperature of about 300°C to about 325°C.

### (A1) First polyetheretherketone resin

The first polyetheretherketone resin according to one embodiment of the invention may have a melting temperature (Tm) of about 330°C to about 350°C, for example, about 335°C to about 345°C, as measured at a heating rate of 20°C/min using a differential scanning calorimeter. If the melting temperature of the first polyetheretherketone resin is less than about 330°C, the thermoplastic resin composition can suffer from deterioration in metal bondability, flowability, and the like, and if the melting temperature exceeds about 350°C, the thermoplastic resin composition can suffer from deterioration in impact resistance, rigidity (tensile strength and the like), and the like.

In some embodiments, the first polyetheretherketone resin may comprise a repeat unit represented by Formula 1.

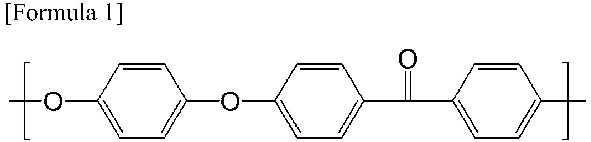

In some embodiments, the first polyetheretherketone resin may have a ratio of ketone groups to ether groups of about 1:1 to about 1:3, as measured by ¹H nuclear magnetic resonance spectroscopy (¹H-NMR spectroscopy). Within this range, the thermoplastic resin composition can have excellent impact resistance, processability (flowability), and the like.

In some embodiments, the first polyetheretherketone resin may have a melt viscosity of about 50 Pa·s to about 200 Pa·s, for example, about 50 Pa·s to about 150 Pa·s, as measured at a temperature of 400°C and a shear rate of 1,000 sec⁻¹ using a capillary viscometer in accordance with ISO 11443. Within this range, the thermoplastic resin composition can have excellent metal bondability, flowability, heat resistance, and the like.

In some embodiments, the first polyetheretherketone resin may have a weight average molecular weight (Mw) of about 60,000 g/mol to about 90,000 g/mol, for example, about 70,000 g/mol to about 80,000 g/mol, as measured by gel permeation chromatography (GPC). The thermoplastic resin composition can have excellent impact resistance, rigidity, and the like.

In some embodiments, the first polyetheretherketone resin may be present in an amount of about 30 wt% to about 70 wt%, for example, about 40 wt% to about 60 wt%, based on 100 wt% of the polyaryletherketone resin comprising the first polyetheretherketone resin and the second polyetheretherketone resin. Within this range, the thermoplastic resin composition can have excellent metal bondability, rigidity (flexural modulus and the like), and the like.

### (A2) Second polyetheretherketone resin

The second polyetheretherketone resin according to one embodiment of the invention may have a melting temperature (Tm) of about 300°C to about 325°C, for example, about 300°C to about 315°C, as measured at a heating rate of 20°C/min using a differential scanning calorimeter. If the melting temperature of the second polyetheretherketone resin is less than about 300°C, the thermoplastic resin composition can suffer from deterioration in heat resistance, processability (flowability), and the like, and if the melting temperature exceeds about 325°C, the thermoplastic resin composition can suffer from deterioration in metal bondability, flowability (injection moldability), and the like.

In some embodiments, the second polyetheretherketone resin may comprise a repeat unit represented by Formula 1.

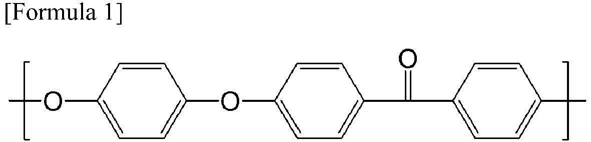

In some embodiments, the second polyetheretherketone resin may have a ratio of ketone groups to ether groups of about 1:1 to about 1:1.9, as measured by ¹H nuclear magnetic resonance spectroscopy (¹H-NMR spectroscopy). Within this range, the thermoplastic resin composition can have excellent metal bondability, flowability, impact resistance, and the like.

In some embodiments, the second polyetheretherketone resin may have a melt viscosity of about 200 Pa·s to about 500 Pa·s, for example, about 200 Pa·s to about 300 Pa·s, as measured at a temperature of 340°C and a shear rate of 1,000 sec⁻¹ using a capillary viscometer in accordance with ISO 11443. Within this range, the thermoplastic resin composition can have excellent impact resistance, metal bondability, flowability, and the like.

In some embodiments, the second polyetheretherketone resin may have a weight average molecular weight (Mw) of about 50,000 g/mol to about 80,000 g/mol, for example, about 60,000 g/mol to about 70,000 g/mol, as measured by gel permeation chromatography (GPC). The thermoplastic resin composition can have excellent impact resistance, flowability, and the like.

In some embodiments, the second polyetheretherketone resin may be present in an amount of about 30 wt% to about 70 wt%, for example, about 40 wt% to about 60 wt%, based on 100 wt% of the polyaryletherketone resin comprising the first polyetheretherketone resin and the second polyetheretherketone resin. Within this range, the thermoplastic resin composition can have excellent metal bondability, rigidity (flexural modulus and the like), and the like.

### (B) Polyarylethersulfone resin

The polyarylethersulfone resin according to one embodiment of the invention may be used together with the polyaryletherketone resin, the glass fiber, and the like to improve properties of the thermoplastic resin composition, such as metal bondability, impact resistance, flowability, property balance therebetween, and the like. The polyarylethersulfone resin may include a polyarylethersulfone resin used in typical thermoplastic resin compositions.

In some embodiments, the polyarylethersulfone resin may include a polyarylethersulfone resin (polyphenylsulfone resin and the like) comprising a repeat unit represented by Formula 2.

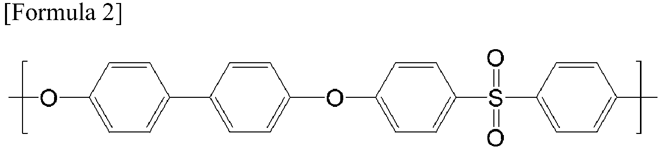

In some embodiments, the polyarylethersulfone resin may have a melt viscosity of about 200 Pa·s to about 400 Pa·s, for example, about 210 Pa·s to about 390 Pa·s, as measured at a temperature of 400°C and a shear rate of 1,000 sec⁻¹ using a capillary viscometer in accordance with ASTM D3835. Within this range, the thermoplastic resin composition can have good flowability and the like.

In some embodiments, the polyarylethersulfone resin may be present in an amount of about 10 to about 45 parts by weight, for example, about 15 to about 40 parts by weight, relative to about 100 parts by weight of the polyaryletherketone resin. If the content of the polyarylethersulfone resin is less than about 10 parts by weight relative to about 100 parts by weight of the polyaryletherketone resin, the thermoplastic resin composition can suffer from deterioration in metal bondability and the like, and if the content of the polyarylethersulfone resin exceeds about 45 parts by weight, the thermoplastic resin composition can suffer from deterioration in impact resistance and the like.

### (C) Glass fiber

The glass fiber according to one embodiment of the present invention may be used together with the polyaryletherketone resin and the polyarylethersulfone resin, and the like to improve properties of the thermoplastic resin composition, such as metal bondability, impact resistance, flowability, property balance, and the like, and may include glass fiber used in typical thermoplastic resin compositions.

In some embodiments, the glass fiber may have various shapes, such as a fibrous shape, a particulate shape, a rod shape, an acicular shape, a flake shape, an amorphous shape, and the like, and may have cross-sections of various shapes, such as a circular cross-section, an oval cross-section, a rectangular cross-section, and the like. For example, glass fiber having circular and/or rectangular cross-sections may be desirable in terms of mechanical properties.

In some embodiments, the glass fiber having a circular cross-section may have a cross-sectional diameter of about 5 µm to about 20 µm and a pre-processing length of about 2 mm to about 20 mm, and the glass fiber having a rectangular cross-section may have an aspect ratio (a ratio of a long-side length to a short-side length in cross-section) of about 1.5 to about 10, a short-side length of about 2 µm to about 10 µm in cross-section, and a pre-processing length of about 2 mm to about 20 mm. Within this range, the thermoplastic resin composition can have improved rigidity (flexural modulus and the like.), metal bondability, and the like.

In some embodiments, the glass fiber may be present in an amount of about 10 to about 60 parts by weight, for example, about 15 to about 50 parts by weight, relative to about 100 parts by weight of the polyaryletherketone resin. If the content of the glass fiber is less than about 10 parts by weight relative to about 100 parts by weight of the polyaryletherketone resin, the thermoplastic resin composition can suffer from deterioration in impact resistance, rigidity, and the like, and if the content of the glass fiber exceeds about 60 parts by weight, the thermoplastic resin composition can suffer from deterioration in metal bondability, impact resistance, flowability, and the like.

The thermoplastic resin composition according to one embodiment of the present invention may further comprise additives included in typical thermoplastic resin compositions. The additives may include heat stabilizers, UV stabilizers, impact modifiers, fillers, flame retardants, anti-dripping agents, antioxidants, lubricants, release agents, nucleating agents, pigments, dyes, mixtures thereof, and the like, without being limited thereto. The additives may be present in an amount of about 0.001 to about 40 parts by weight, for example, about 0.1 to about 20 parts by weight, relative to about 100 parts by weight of the polyaryletherketone resin.

The thermoplastic resin composition according to one embodiment of the invention may be prepared in pellet form by mixing the aforementioned components, followed by melt extrusion at about 330°C to about 420°C, for example, at about 340°C to about 400°C, using a typical twin-screw extruder.

In some embodiments, the thermoplastic resin composition may have a metal bonding strength of about 35 MPa to about 60 MPa, for example, about 40 MPa to about 60 MPa, with respect to an aluminum-based metal specimen, as measured in accordance with ISO 19095.

In some embodiments, the thermoplastic resin composition may have a notched Izod impact strength of about 5 kgf·cm/cm to about 15 kgf·cm/cm, for example, about 7 kgf·cm/cm to about 10 kgf·cm/cm, as measured on a 1/8" thick specimen in accordance with ASTM D256.

In some embodiments, the thermoplastic resin composition may have a spiral flow length of about 75 mm to about 120 mm, for example, about 75 mm to about 115 mm, as measured on a specimen after injection molding of the specimen in a spiral-shaped mold having a size of 15 mm width and 0.5 mm thickness under conditions of a molding temperature of 380°C, a mold temperature of 150°C, an injection pressure of 100 MPa, and an injection rate of 100 mm/s.

A molded article according to the present invention is produced from the thermoplastic resin composition. The thermoplastic resin composition may be prepared in pellet form and the prepared pellets may be produced into various molded articles (products) by various molding methods, such as injection molding, extrusion molding, vacuum molding, casting, and the like. These molding methods are well known to a person having ordinary knowledge in the art. The molded article has good properties in terms of bondability properties, impact resistance, flowability, property balance therebetween, and the like, and can be useful as metal bonding materials for portable devices such as smartphones.

A composite material according to the present invention may include a plastic member produced from the thermoplastic resin composition; and a metal member adjoining the plastic member.

In some embodiments, the plastic member and the metal member may be in direct contact without a bonding agent therebetween. For example, the plastic member and the metal member may be integrally formed with each other by insert injection molding.

In some embodiments, the metal member may comprise at least one selected from among aluminum, titanium, iron, and zinc.

### [Mode for Invention]

Next, the present invention will be described in more detail with reference to some examples. However, it should be noted that these examples are provided for illustration only and are not to be construed in any way as limiting the present invention.

### EXAMPLE

Details of components used in Examples and Comparative Examples are as follows:
(A) Polyaryletherketone resin
   (A1) A polyetheretherketone resin (manufacturer: Victrex, product name: 90P, melting temperature: about 345°C) was used as the first polyetheretherketone resin.
   (A2) A polyetheretherketone resin (manufacturer: Victrex, product name: EEG160, melting temperature: about 305°C) was used as the second polyetheretherketone resin.
(B) Polyarylethersulfone resin
   A polyphenylsulfone resin (manufacturer: BASF, product name: P3010) was used.
(C) Glass fiber

Rectangular cross-sectional glass fiber (manufacturer: Nittobo, product name: CSG 3PA-820) was used.

### Examples 1 to 5 and Comparative Examples 1 to 5

The aforementioned components were mixed in amounts as listed in Tables 1 and 2, followed by extrusion at 370°C, thereby preparing a thermoplastic resin composition in pellet form. Here, extrusion was performed using a twin-screw extruder (L/D: 40, diameter: 45 mm). The prepared pellets were dried at 100°C for 4 hours or more and then subjected to injection molding using a 6 oz. injection machine (molding temperature: 400°C, mold temperature: 150°C), thereby preparing a specimen. The prepared specimen was evaluated as to the following properties. Results are shown in Tables 1 and 2.

### Property evaluation

(1) Metal bonding strength (unit: MPa): In accordance with ISO 19095, an aluminum-based metal specimen and a thermoplastic composite specimen were bonded to each other by insert injection molding and bonding strength therebetween was measured. Here, the aluminum-based metal specimen was subjected to Geo Nation's TRI surface treatment to facilitate bonding to the resin composition specimen. In addition, the aluminum-based metal specimen and the thermoplastic resin composition specimen had a size of 1.2 cm × 4 cm × 0.3 cm and were bonded to each other through a cross-sectional area of 1.2 cm × 0.3 cm to measure the bonding strength.
(2) Notched Izod impact strength (unit: kgf·cm/cm): Notched Izod impact strength was measured on a 1/8" thick specimen in accordance with ASTM D256.
(3) Spiral flow length (unit: mm): Spiral flow length was measured on a specimen, which was prepared through injection molding in a spiral-shaped mold having a size of 15 mm width and 0.5 mm thickness under conditions of a molding temperature of 380°C, a mold temperature of 150°C, an injection pressure of 100 MPa, and an injection rate of 100 mm/s.

**Table 1**

| | | Example | | | | |
|---|---|---|---|---|---|---|
| | | 1 | 2 | 3 | 4 | 5 |
| (A) (wt%) | (A1) | 50 | 50 | 50 | 50 | 50 |
| | (A2) | 50 | 50 | 50 | 50 | 50 |
| (B) (parts by weight) | | 15 | 27.5 | 40 | 27.5 | 27.5 |
| (C) (parts by weight) | | 30 | 30 | 30 | 15 | 50 |
| Metal bonding strength | | 45 | 48 | 50 | 55 | 42 |
| Notched Izod impact strength | | 7.5 | 7.6 | 7.6 | 9.1 | 6.5 |
| Spiral flow length | 80 | 86 | 91 | 112 | 78 | |

| | | | | | | |
|---|---|---|---|---|---|---|
| *parts by weight: parts by weight relative to 100 parts by weight of polyaryletherketone resin (A) | | | | | | |

**Table 2**

| | | Comparative Examples | | | | |
|---|---|---|---|---|---|---|
| | | 1 | 2 | 3 | 4 | 5 |
| (A) (wt%) | (A1) | 100 | - | 50 | 50 | 50 |
| | (A2) | - | 100 | 50 | 50 | 50 |
| (B) (parts by weight) | | 27.5 | 27.5 | 5 | 50 | 27.5 |
| (C) (parts by weight) | | 30 | 30 | 30 | 30 | 90 |
| Metal bonding strength | | 23 | 28 | 32 | 48 | 31 |
| Notched Izod impact strength | | 5.9 | 4.5 | 7.0 | 4.1 | 3.5 |
| Spiral flow length | | 72 | 80 | 82 | 85 | 55 |

| | | | | | | |
|---|---|---|---|---|---|---|
| *parts by weight: parts by weight relative to 100 parts by weight of polyaryletherketone resin (A) | | | | | | |

From the above results, it can be seen that the thermoplastic resin compositions according to the present invention have good properties in terms of metal bondability (metal bonding strength), impact resistance (notched Izod impact strength), flowability (spiral flow length), property balance therebetween, and the like.

Conversely, it could be seen that the thermoplastic resin composition of Comparative Example 1 prepared using the first polyetheretherketone resin alone as the polyaryletherketone resin suffered from deterioration in metal bondability, flowability, and the like, and the thermoplastic resin composition of Comparative Example 2 prepared using the second polyetheretherketone resin alone as the polyaryletherketone resin suffered from deterioration in metal bondability, impact resistance, and the like. It could be seen that the thermoplastic resin composition of Comparative Example 3 prepared using an insufficient amount of the polyarylethersulfone resin suffered from deterioration in metal bondability and the like, and the thermoplastic resin composition of Comparative Example 4 prepared using an excess of the polyarylethersulfone resin suffered from deterioration in flowability and the like. In addition, it could be seen that the thermoplastic resin composition of Comparative Example 5 prepared using an excess of the glass fiber suffered from deterioration in metal bondability, impact resistance, flowability, and the like, and the thermoplastic resin composition prepared using an insufficient amount of the glass fiber suffered from deterioration in impact resistance, rigidity, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the invention. The scope of the invention should be defined by the appended claims rather than by the foregoing description, and the claims and equivalents thereto are intended to cover such modifications and the like as would fall within the scope of the invention.

## Claims

1. A thermoplastic resin composition comprising:
about 100 parts by weight of a polyaryletherketone resin comprising a first polyetheretherketone resin having a melting temperature of about 330°C to about 350°C and a second polyetheretherketone resin having a melting temperature of about 300°C to about 325°C;
about 10 to about 45 parts by weight of a polyarylethersulfone resin; and
about 10 to about 60 parts by weight of glass fiber.

2. The thermoplastic resin composition according to claim 1, wherein the polyaryletherketone resin comprises about 30 wt% to about 70 wt% of the first polyetheretherketone resin and about 30 wt% to about 70 wt% of the second polyetheretherketone resin.

3. The thermoplastic resin composition according to claim 1 or 2, wherein the first polyetheretherketone resin and the second polyetheretherketone resin comprise a repeat unit represented by Formula 1.

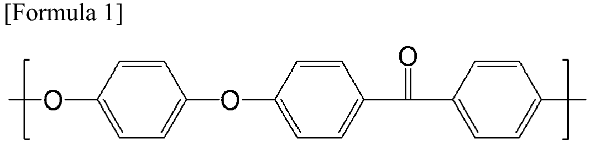

4. The thermoplastic resin composition according to any one of claims 1 to 3, wherein the first polyetheretherketone resin has a ratio of ketone groups to ether groups of about 1:1 to about 1:3.

5. The thermoplastic resin composition according to any one of claims 1 to 4, wherein the first polyetheretherketone resin has a melt viscosity of about 50 Pa·s to about 200 Pa·s, as measured at a temperature of 400°C and a shear rate of 1,000 sec⁻¹ using a capillary viscometer in accordance with ISO 11443.

6. The thermoplastic resin composition according to any one of claims 1 to 5, wherein the second polyetheretherketone resin has a ratio of ketone groups to ether groups of about 1:1 to about 1:1.9.

7. The thermoplastic resin composition according to any one of claims 1 to 6, wherein the second polyetheretherketone resin has a melt viscosity of about 200 Pa·s to about 500 Pa·s, as measured at a temperature of 340°C and a shear rate of 1,000 sec⁻¹ using a capillary viscometer in accordance with ISO 11443.

8. The thermoplastic resin composition according to any one of claims 1 to 7, wherein the polyarylethersulfone resin comprises a repeat unit represented by Formula 2.

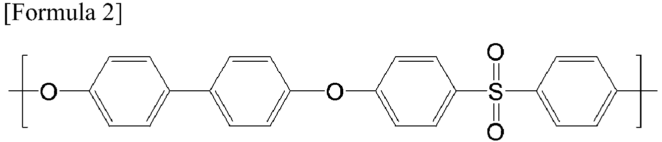

9. The thermoplastic resin composition according to any one of claims 1 to 8, wherein the polyarylethersulfone resin has a melt viscosity of about 200 Pa·s to about 400 Pa·s, as measured at a temperature of 400°C and a shear rate of 1,000 sec⁻¹ using a capillary viscometer in accordance with ASTM D3835.

10. The thermoplastic resin composition according to any one of claims 1 to 9, wherein the thermoplastic resin composition has a metal bonding strength of about 35 MPa to about 60 MPa with respect to an aluminum-based metal specimen, as measured in accordance with ISO 19095.

11. The thermoplastic resin composition according to any one of claims 1 to 10, wherein the thermoplastic resin composition has a notched Izod impact strength of about 5 kgf·cm/cm to about 15 kgf·cm/cm, as measured on a 1/8" thick specimen in accordance with ASTM D256.

12. The thermoplastic resin composition according to any one of claims 1 to 11, wherein the thermoplastic resin composition has a spiral flow length of about 75 mm to about 120 mm, as measured on a specimen after injection molding of the specimen in a spiral-shaped mold having a size of 15 mm width and 0.5 mm thickness under conditions of a molding temperature of 380°C, a mold temperature of 150°C, an injection pressure of 100 MPa, and an injection rate of 100 mm/s.

13. A molded article produced from the thermoplastic resin composition according to any one of claims 1 to 12.

14. A composite material comprising:
a plastic member produced from the thermoplastic resin composition according to any one of claims 1 to 12; and
a metal member adjoining the plastic member.

15. The composite material according to claim 14, wherein the metal member comprises at least one selected from aluminum, titanium, iron, and zinc.
